# EUROPEAN PATENT APPLICATION

(11) **EP 1 884 709 A2**
(43) Date of publication of application: **06.02.2008**
(21) Application number: 07113142.9
(22) Date of filing: 25.07.2007
(51) Int. Cl.: F21V 8/00, G02B 5/00

(54) **Light-redirecting film containing optical modification layer**

(30) Priority: 27.07.2006 US 833713 P; 25.01.2007 US 657946
(71) Applicant: Rohm and Haas Denmark Finance A/S, 2100 Copenhagen (DK)
(72) Inventor: Bourdelais, Robert P, Rochester, NY 14650 (US); Rankin, Charles M Jnr, Penfield, NY 14526 (US); Palmeri, John M, Hamlin, NY 14464 (US); Brewer, John C, Rochester, NY 14618 (US); Betancourt, Esther M, Rochester, NY 14650 (US)
(74) Representative: Buckley, Guy Julian

(57) **Abstract**

A light redirecting film comprises a light exit surface bearing (a) optical elements and (b) an optical modification layer containing microbeads and a binder disposed over the optical elements wherein said light redirecting film has an optical gain of at least 1.20.

## Description

### CROSS REFERENCE TO RELATED APPLICATIONS

Reference is made to and priority claimed from U.S. Provisional application Serial No. 60/833,713, filed July 27, 2006, the contents of which are incorporated herein by reference.

### FIELD OF THE INVENTION

This invention relates to the formation of a light redirecting polymeric film comprising a plurality of optical elements containing an optical modification layer. In particular, a light redirecting film having a wide, uniform light output suitable for directing light energy in LCD display devices.

### BACKGROUND OF THE INVENTION

Light redirecting films are typically thin transparent optical films or substrates that redistribute the light passing through the films such that the distribution of the light exiting the films is directed more normal to the surface of the films. Typically, light redirecting films are provided with ordered prismatic grooves, lenticular grooves, or pyramids on the light exit surface of the films which change the angle of the film/air interface for light rays exiting the films and cause the components of the incident light distribution traveling in a plane perpendicular to the refracting surfaces of the grooves to be redistributed in a direction more normal to the surface of the films. Such light redirecting films are used, for example, to improve brightness in liquid crystal displays (LCD), laptop computers, word processors, avionic displays, cell phones, PDAs and the like to make the displays brighter. Previous light redirecting films suffer from visible Moiré patterns when the light redirecting film is used with a liquid crystal or other display. The surface elements of the light redirecting film interact with other optical films utilized in backlight assemblies, the pattern of printed dots or three-dimensional elements on the back of the light guide plate, or the pixel pattern inside the liquid crystal section of the display to create Moiré, an undesirable effect. Methods known in the art for reducing Moiré have been to die cut the light redirecting films such that the lenticular array is not normal to any side of the sheet. This makes the lenticular array be at an angle relative to another light redirecting film or to the display electronics. Methods also used include randomizing the linear array by widths of the linear array elements, to vary the height along the linear array periodically, to add a diffusing layer on the opposite side of the linear array on the film, or to round the ridges of the linear array. The above techniques to reduce Moiré also cause a decrease in on-axis brightness or do not work to adequately solve the Moiré problem. Moiré and on-axis brightness tend to be related, meaning that a film with high on-axis gain would have high Moiré in a system. It would be beneficial to be able to reduce the Moiré while maintaining sufficient on-axis gain.

In addition, there are relatively few numbers of light redirecting films compared with the numbers of liquid crystal display configurations. Each display configuration was selected to fill a desired output. The amount of on-axis gain, viewing angle, Moiré reduction, and total light output were all tailored by combining different films in different configurations. The light redirecting film used in the systems is limited because there are only a few different light redirecting surface textures available. It would be desirable to have a light redirecting film that was customizable to the desired output of the display device.

Typical light directing films provide high on-axis illumination at the expense of illumination at angles between 40 and 90 degrees from the normal. These high, on-axis light directing films are useful for portable display devices such as laptop computers and games were a high on-axis brightness lessens the power consumption for batteries and provides for some level of viewing privacy. For some TV and monitor applications that are intended for public viewing, high brightness over a wide range of viewing angles allows for consistent viewing of images and video. It would be desirable to have a light directing film that could provide high brightness over a wide range of viewing angles.

US Patent 5,919,551 (Cobb, Jr. et al) claims a linear array film with variable pitch peaks and/or grooves to reduce the visibility of Moire interference patterns. The pitch variations can be over groups of adjacent peaks and/or valleys or between adjacent pairs of peaks and/or valleys. While this varying of the pitch of the linear array elements does reduce Moiré, the linear elements of the film still interact with the dot pattern on the backlight light guide and the electronics inside the liquid crystal section of the display.

US Patent 6,354,709 discloses a film with a linear array that varies in height along its ridgeline and the ridgeline also moves side to side. While the film does redirect light and its varying height along the ridgeline slightly reduces Moiré, it would be desirable to have a film that significantly reduces the Moiré of the film when used in a system while maintaining a relatively high on-axis gain.

US application 2001/0053075 (Parker et al.) discloses the use of individual optical elements for the redirecting of light to create high on-axis gain in a LCD device.

US 6,721,102 (Bourdelais et al.) discloses a visible light diffuser formed with complex polymer lenses. The complex lenses disclosed in US 6,721,102 are created by adding micrometer sized polymer lenses on the surface of low aspect ratio polymer base lenses. The ratio of smaller lenses to large lens is between 2:1 to 30:1. The diffuser disclosed in US 6,721,102 is useful for diffusing light sources, in particular, LCD backlight sources.

U.S. 6,583,936 (Kaminsky et al) discloses a patterned roller for the micro-replication of light polymer diffusion lenses. The patterned roller is created by first bead blasting the roller with multiple sized particles, followed by a chroming process that creates micro-nodules. The manufacturing method for the roller is well suited for light diffusion lenses that are intended to diffuse incident light energy.

US Application 2005/00247554 (Epstein et al.) discloses surface structures that are coated with a matrix polymer contain polymer beads preferably having a diameter of between 2 and 5 micrometers to create random scattering.

US Application 2005/0047112 (Chen et al.) discloses a light guide plate with prisms formed on the surface of the light guide plate. The surface of the prisms contain a coated inorganic nano-particle layer consisting of titanium dioxide, silicone dioxide or aluminum oxide to scatter transmitted light.

US Application 2005/0140860 (Olczak) discloses an optical film defined by a first surface structure function modulated by a second surface structure such that the first surface acts to diffuse light incident on the film and the second surface also functions to diffuse incident light.

US Application 2005/0174646 (Cowan et al.) discloses a reflective diffuser, which transmits or reflects incident light into a specific range of angles.

### PROBLEM TO BE SOLVED BY THE INVENTION

There is a need to provide a light redirecting film that provides high brightness over a wide range of viewing angles.

### SUMMARY OF THE INVENTION

The invention provides a light redirecting film comprising a light exit surface bearing (a) optical elements and (b) an optical modification layer containing microbeads and a binder disposed over the optical elements wherein said light redirecting film has an optical gain of at least 1.20.

### ADVANTAGEOUS EFFECT OF THE INVENTION

The invention provides an optical device comprising a light redirecting film having high brightness over a wide range of viewing angles.

### BRIEF DESCRIPTION OF THE DRAWINGS

The invention is best understood from the following detailed description when read with the accompanying drawing figures. It is emphasized that the various features are not necessarily drawn to scale.
Fig. 1 is a simplified schematic diagram of an apparatus for fabricating optical films in accordance with an example embodiment.
Fig. 2 is a magnified top view of a macrostructure in accordance with an example embodiment.
Fig. 3 is a magnified top view of a macrostructure in accordance with an example embodiment.

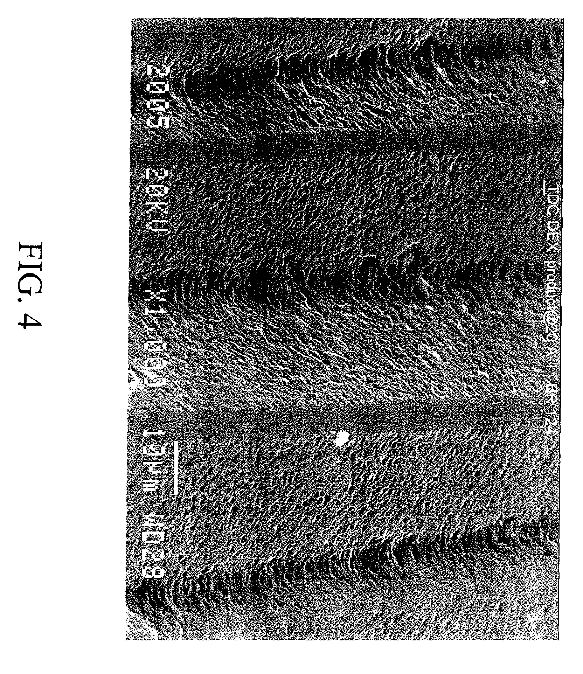

Fig. 4 is a magnified top view of a macrostructure in accordance with an example embodiment.

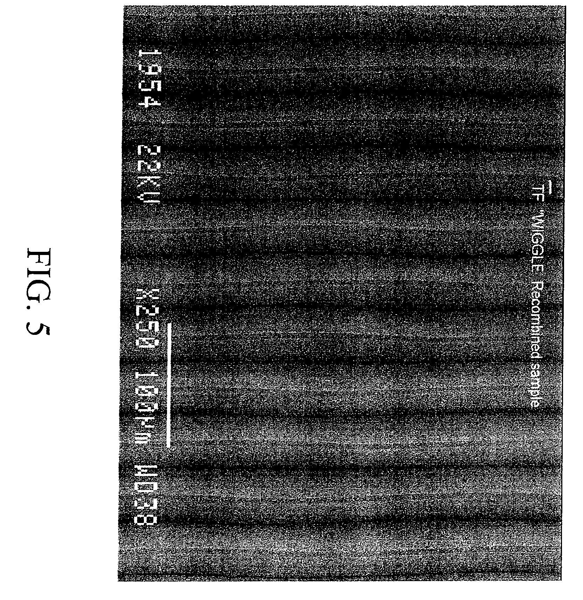

Fig. 5 is a magnified top view of a macrostructure in accordance with an example embodiment.
Fig. 6 is a magnified top view of a macrostructure coated with an optical modification layer in accordance with example embodiments.
Fig. 7 is a magnified top view of a macrostructure coated with an optical modification layer in accordance with example embodiments.
Fig. 8 is a magnified top view of a macrostructure coated with an optical modification layer in accordance with example embodiments.
Fig. 9 is a magnified top view of a macrostructure coated with an optical modification layer in accordance with example embodiments.
Fig. 10 is a magnified top view of a macrostructure coated with an optical modification layer in accordance with example embodiments.
Fig. 11 is a plot of horizontal tilt angle vs. luminance for prior art optical films and two example embodiments.
Fig. 12 is a plot of vertical tilt angle vs. luminance for prior art optical films and two example embodiments.
Fig. 13 is a plot of horizontal tilt angle vs. optical gain for prior art optical films and two example embodiments.
Fig. 14 is a plot of vertical tilt angle vs. optical gain for prior art optical films and two example embodiments.

### DETAILED DESCRIPTION OF THE INVENTION

The invention has numerous advantages compared to current light redirecting films. The invention provides high levels of brightness over a wide range of viewing angles. This combination of high brightness and wide viewing angles is well suited for the LCD TV and monitor market. High brightness allows for efficient utilization of LCD backlight energy and wide viewing angles ensure even, uniform brightness of the LCD image over a wide range of viewing angles typical of monitors and TV applications. Further, the film provides a softer angular cut-off compared to prior art light directing films. Prior art light directing films have a hard angular cut-off causing illumination to change dramatically over a few degrees. While this hard angular cut-off is acceptable or even preferred for personal viewing devices such as laptop computers, hard angular cut-off can cause a reduction in image quality for LCD devices that are viewed over larger angles such as TV and public view monitors.

The optical modification layer applied to the surface of the optical elements allows more incident light to pass through the light redirecting film compared to prior art light redirecting films. It has been found that the optical modification layer applied to the surface of the optical elements "frustrates" or reduces the amount of total internal reflection in the light redirecting film. The frustration of the total internal reflection of the light redirecting film results in between 5 and 14% higher light output compared to the same light redirecting film without the optical modification layer.

The film's individual optical elements' and placement on the film balances the tradeoff between Moiré reduction and on-axis gain producing relatively high on-axis gain while significantly reducing Moiré. Moiré patterns result when two or more regular sets of lines or points overlap. It results in a pattern of repeating lines or shapes, the line size and frequency depending on the two patterns interacting. In a display device such as an LCD display, Moiré patterns that can be observed by the viewer of the LCD device are objectionable as they interfere with the quality of the displayed information or image. The light redirecting film of the invention reduces Moiré compared to prior art light redirecting films while maintaining the amount of on-axis gain. The size and shape distributions of the individual elements and optical modification layer can be customized for each display or viewing application.

Furthermore, the light redirecting film of the invention can be customized to the light source and light output of the light guide plate in order to more efficiently redirect the light. The individual optical elements make the film very flexible in design parameters, allowing different individual optical elements of different size, shape or orientation to be used throughout the film surface to process the light entering the film the most efficiently. For example, if the light output as a function of angle was known for all points on the light guide plate, a light redirecting film using individual optical elements having different shapes, sizes, or orientation could be designed to efficiently process the light exiting the light guide plate.

Newton rings occur when two reflective surfaces (for example light redirecting films or other optical films in a liquid crystal display) are close enough to each other that the distance starts to approximate the wavelength of light. Photons reflect between the two surfaces as well as passing through them, creating interference effects. Newton rings are undesirable to a viewer through a liquid crystal display. The film of the invention reduces Newton rings by having a percentage of the individual elements extend above other elements on the light redirecting film.

The film of the invention has a larger effective pitch with multiple sized elements than a light redirecting film with only one sized element. Having a larger effective pitch means that film will have higher on-axis gain than the more overlapped film with the same size land, or manufacturing tolerances could be lessened such that the land could become larger to have the same on-axis performance as the more overlapped film. Lessening the manufacturing tolerances could increase productivity of manufacturing the film.

The invention utilizes polymers for the base sheet and binder that resist scratching and abrasion and have been shown to be mechanically tougher compared to other prior art delicate light redirecting films constructed from UV cured polyacrylate.

Embodiments of the invention may also provide low coefficient of friction surface, reduced dielectric constant, abrasion resistance, increased stiffness, lower scattering, improved Moire, higher light output and improved coloration. These and other advantages will be apparent from the detailed description below.

As used herein, "transparent" means the ability to pass radiation without significant deviation or absorption. For this invention, "transparent" material is defined as a material that has a spectral transmission greater than 90%. The term "light" means visible light. The term "polymeric film" means a film comprising polymers. The term "polymer" means homo-polymers, block co-polymers, co-polymers and polymer blends. As used herein, the term microbead means a bead that is circular to elliptical in cross-section that has a diameter or major axis of from 0.1 to 30 micrometers.

Individual optical elements, in the context of an optical film, mean elements of a well-defined shape that can be projections or depressions in the optical film. Individual optical elements are small relative to the length and width of an optical film. The term "curved surface" is used to indicate a three dimensional element on a film that has curvature in at least one plane. "Wedge shaped elements" is used to indicate an element that includes one or more sloping surfaces, and these surfaces may be combination of planar and curved surfaces. The term "optical film" is used to indicate a thin polymer film that changes the nature of transmitted incident light. For example, a redirecting optical film provides an optical gain (output/input) greater than 1.0. The Optical Gain (OG) of a light management material is defined as the luminance of the light management material divided by the reference input luminance.
Given that light distributions are rarely isotropic, this ratio is typically computed for specific angular coordinates (theta and phi). It is customary in the art to represent a subset of these ratios by plotting two cross-sectional graphs: one at phi = 0 and the other at phi = 90, while theta varies continuously from -80 to +80 degrees. Unless otherwise specified optical gain is defined as the gain for the condition phi and theta = 0, with the associated reference input luminance being a commercially available diffuser plate common to present day LCD TV. "On-axis gain" is defined as output light intensity perpendicular to the film plane, divided by input light intensity. "Redirecting" is defined as an optical property of an optical film to change the direction on incident light energy.

The term "nano-nodules" or "nanometer sized nodules" means concave and/or convex formations having an average maximum cord length in a plane perpendicular to the direction of light travel of not more than 1200nm. Nano-nodules are applied over the surface of an optical surface to change the optical output characteristics of the optical surface and are often several magnitudes smaller than the optical surface to which they are applied. Nano-nodules are integral to the optical surface, conveniently having the same composition of the optical surface. The nano-nodules can be of any shape regular or irregular, and are characterized by their maximum cord length in a plane perpendicular to the direction of light travel. The nano-nodules may cover some or the entire optical surface. As an example, on the surface of a 10-micrometer square area of optical surface, there may be between 50 and 200 nano-nodules depending on the size, shape and coverage. Typically, Nano-nodules have a depth or height to/cord length aspect ratio between 0.5 and 5.0.

The term roughness average or Rₐ means the average peak to valley height between the beads in the optical modification layer and is measured in by a profilometer and the result is expressed in micrometers. The term Ra is used to characterize the average roughness of a given area or on the surface area of an optical element.

The term optical element means surface structures on the surface of a substrate that have a positive profile. The optical elements are elements that perform a designated optical function such as redirection or diffusion or turning of incident light. The term light redirecting film means a thin film than perform the function of redirecting incident light into a desired output. Redirection can be either specular or diffuse. Examples of redirecting films include, but are not limited to turning films, diffusion films and retro-reflective films.

The term optical modification layer means an optically active layer that further modifies the light output of an optical element. The optical modification layer is applied to the surface of the desired optical elements.

In order to accomplish a light directing film having high brightness and a wide angular viewing in display devices such as LCD TV, light redirecting film comprising a light exit surface bearing (a) optical elements and (b) an optical modification layer containing microbeads and a binder over the optical elements wherein said light redirecting film has an optical gain of at least 1.20 is preferred. By providing a relative large macrostructure greater than at least 25 micrometers in one dimension, the macro-structures will tend to collimate incident light energy by reflecting incident light rays at large angles measured to the normal and allowing light rays on axis or at small angles measured to the normal to be transmitted. It has been shown that by substantially covering the redirecting macrostructures with an optical modification layer comprising beads in a polymer matrix, the incident light energy is redirected over a wider angle compared to the same redirecting macrostructure without the optical modification layer. Further, the angular brightness cut-off is softer and less abrupt compared to the same redirecting macrostructure without the optical modification layer. In addition, the optical modification layer has been shown to hide small cosmetic defects in the optical film, provides a reduction in Moire compared to light redirecting macrostructures without optical modification layer and better obscures the backlight pattern from the viewer eye compared to light redirecting macrostructures without optical modification layer.

The beads in the optical modification layer are small and efficiently reduce the slope of the angular luminance curve off axis compared to prior art diffuser materials that tend to scatter light energy. Scattered light energy in a LCD display will tend to significantly reduce contrast ratio in a liquid crystal cell thereby reducing image quality. By providing small beads on the sides of the macrostructures, the beads contained in a binder matrix reduce the slope of the angular luminance curve without unwanted scatter.

On-axis brightness and luminance angles are important determining factors in the contrast ratio of current LCD TV modalities. While increasing on-axis brightness has been shown to improve contrast ratio, angular brightness cut-off is hard. The invention provides a unique combination of high on-axis brightness while providing a soft angular cut-off and a much-improved angular distribution of light that provides excellent image quality to public display devices such as LCD monitors and TV.

In a preferred embodiment, the microbeads comprise polymers. Polymer beads tend to be less expensive than inorganic beads, typically have high light transmission and have been shown to adhere well to the macrostructures with polymer binders such as polyurethane. Preferred bead materials include but not limited to polystyrene, PMMA, methyl methacrylate and ethyleneglycol dimethacrylate.

In a preferred embodiment, the micro beads are substantially circular. Circular micro beads have been found to provide excellent diffusion of incident light, can be easily coated and do not have sharp angular profiles that could result in abrasion of other adjacent optical components.

In another preferred embodiment, the micro-beads are elliptical. Elliptical microbeads have been shown to orient during coating and orient to the direction of some macrostructures. Elliptical beads have also been shown to provide light output that can favor the major axis of the elliptical beads allowing for independent control of vertical and horizontal brightness.

In another preferred embodiment of the invention, the microbeads are present in two or more size distributions. By providing tow or more size distributions of beads contained in a matrix, the output of light can be further customized and fine-tuned to the desired output. Further, by providing a bead size that is larger than the macrostructure, the large bead distribution provides an optical stand-off between adjacent optical components reducing possible abrasion, Newton rings and undesirable optical wet-out.

In another preferred embodiment, the index of refraction between the beads and the binder is less than 0.10. A delta index of refraction of less than 0.10 between the beads and binder has been shown to increase the efficiency of the light redirecting film by reducing unwanted Fresnel reflections. The index delta of less than 0.10 also tends to reduce the amount of light diffusion of the beads resulting in a redirecting film than has high on axis brightness. In another preferred embodiment of the invention, the index of refraction delta between the macrostructure, the microbeads and the binder are less than 0.10. The index delta of less than 0.10 further increases the efficiency of the light redirecting film and further increases on axis brightness.

In another preferred embodiment, the index of refraction delta between the binder and the beads is greater than 0.15. By increasing the index delta between the microbeads and the binder, the amount of light scatter is increased resulting in a softer angular cut-off and a wider ½ angle.

In another preferred embodiment, the ratio of the optical element height to major axis diameter of the microbeads is less than 0.10. A ratio of less than 0.10 allows for many beads to populate the surface of the optical element, creating excellent uniformity of transmitted light in display systems such as LCD and OLED.

In another preferred embodiment, the microbeads comprise inorganic materials. Some organic materials, typically high index nanometer sized materials have been shown to increase the index of refraction of polymer materials between 20 and 80%. Increasing index of refraction results higher haze for a relative small amount of material. The inorganic materials also tend to scatter light, providing an increase in display uniformity.

The minute inorganic particles preferably comprise inorganic oxides, and more preferably metal oxides. Inorganic oxide particles of the present invention are desirably substantially spherical in shape, relatively uniform in size (have a substantially monodisperse size distribution) or a polymodal distribution obtained by blending two or more substantially monodisperse distributions. It is further preferred that the inorganic oxide particles be and remain substantially non-aggregated (substantially discrete), as aggregation can result in large particles that scatter light, reducing optical clarity.

A wide range of colloidal inorganic oxide particles can be used in the optical element of the present invention. Representative examples include silica, titania, alumina, zirconia, vanadia, chromia, iron oxide, antimony oxide, tin oxide, and mixtures thereof. The inorganic oxide particles can comprise essentially a single oxide such as silica, a combination of oxides, such as silica and aluminum oxide, or a core of an oxide of one type (or a core of a material other than a metal oxide) on which is deposited an oxide of another type.

The binder material preferably is a polymer than can be coated, has high light transmission and can adhere to the optical elements. Preferred materials include but are not limited to gelatin, PVA, polyurethane, acrylics, pressure sensitive adhesives, PVP, polyester and polycarbonate. The binder preferably is mechanically tough, abrasion resistant and does not significantly yellow after UV exposure. Surfactants, stabilizers, UV filter materials, optical brighteners and antioxidants may also be added to the binder to improve coat-ability, wet-out of the binder containing the beads on the surfaces of the optical structures and color stability.

In one embodiment of the invention, the macrostructures are preferably structures having a length, diameter or other major dimension of at least 25 micrometers that collimate incident light energy. In one embodiment of the invention, the macrostructure preferably comprises a prism. Prism structures have been shown to be efficient collimators of light and generally have two sloping surfaces that contain the nano-nodules. Light collimation generally is maximized when the included angle of the prism is between 88 and 92 degrees. In another preferred embodiment of the invention, the macrostructures comprise individual optical elements having a ridgeline. Individual optical elements have been shown to reduce Moiré and improve brightness uniformity compared to regular prismatic structures.

The depths of the macrostructures are preferably between 10 and 50 micrometers. The depth of the curved macrostructures is measured from the ridge of the curved macrostructures to the base of the curved macrostructures. A depth less than 8 micrometers results in a redirecting film with low brightness. A depth greater than 55 micrometers is difficult to manufacture and contains features large enough to create a Moiré pattern.

In a preferred embodiment, the macrostructures preferably have a width of between 20 and 100 micrometers. When the macrostructures have a width of greater than 130 micrometers, they become large enough that the viewer can see them through the liquid crystal display, detracting from the quality of the display. When the macrostructures have a width of less than 12 micrometers, the width of the ridgeline of the feature takes up a larger portion of the width of the feature. This ridgeline is typically flattened and does not have the same light shaping characteristics of the rest of the macrostructures. This increase in amount of width of the ridgeline to the width of the macrostructures decreases the performance of the optical film. More preferably, the curved macrostructures have a width of between 15 and 60 micrometers. It has been shown that this range provides good light shaping characteristics and cannot be seen by the viewer through a display. The specific width used in a display device design will depend, in part, on the pixel pitch of the liquid crystal display. The element width should be chosen to help minimize Moiré interference.

The length of the macrostructures as measured along the protruding ridge is preferably between 800 and 3000 micrometers. As the long dimension lengthens the pattern becomes one-dimensional and a Moiré pattern can develop. As the pattern is shortened the screen gain is reduced and therefore is not of interest. This range of length of the curved macrostructures has been found to reduce unwanted Moiré patterns and simultaneously provide high on-axis brightness.

In another preferred embodiment, the macrostructures as measured along the protruding ridge is preferably between 100 and 600 micrometers. As the long dimension of the macrostructures is reduced, the tendency to form Moiré patterns is also reduced. This range of macrostructures length has been shown to significantly reduce unwanted Moiré patterns encountered in display devices while providing on-axis brightness.

The macrostructures of the invention are preferably overlapping. By overlapping the curved macrostructures, Moiré beneficial reduction was observed. Preferably, the curved macrostructures of the invention are randomly placed and parallel to each other. This causes the ridges to be generally aligned in the same direction. It is preferred to have generally oriented ridgelines so that the film collimates more in one direction than the other which creates higher on-axis gain when used in a liquid crystal backlighting system. The curved macrostructures are preferably randomized in such a way as to eliminate any interference with the pixel spacing of a liquid crystal display. This randomization can include the size, shape, position, depth, orientation, angle or density of the optical elements. This eliminates the need for diffuser layers to defeat Moiré and similar effects.

At least some of the macrostructures may be arranged in groupings across the exit surface of the films, with at least some of the optical elements in each of the groupings having a different size or shape characteristic that collectively produce an average size or shape characteristic for each of the groupings that varies across the films to obtain average characteristic values beyond machining tolerances for any single optical element and to defeat Moire and interference effects with the pixel spacing of a liquid crystal display. In addition, at least some of the macrostructures may be oriented at different angles relative to each other for customizing the ability of the films to reorient/redirect light along two different axes. It is important to the gain performance of the films to avoid planar, un-faceted surface areas when randomizing features. Algorithms exist for pseudo-random placement of these features that avoid un-faceted or planar areas.

In one embodiment of the invention, the macrostructures preferably have a cross section indicating a 90 degree included angle at the highest point of the feature. It has been shown that a 90 degree peak angle produces the highest on-axis brightness for the light redirecting film. The 90 degree angle has some latitude to it, it has been found that an angle of 88 to 92 degrees produces similar results and can be used with little to no loss in on-axis brightness. When the angle of the peak is less than 85 degrees or more than 95 degrees, the on-axis brightness for the light redirecting film decreases. Because the included angle is preferably 90 degrees and the width is preferably 15 to 30 micrometers, the curved wedge shaped features preferably have a maximum ridge height of the feature of between 7 and 30 micrometers. It has been shown that this range of heights of the wedge shaped elements provide high on-axis gain and Moiré reduction.

In another embodiment of the invention, the apex width preferably is greater than 90 and less than 130 degrees. It has been found that apex widths greater than 90 degrees and less than 130 degrees provide a softer-cut off than apex angles between 88 and 92 degrees.

The macrostructures have an average pitch of between 10 and 55 micrometers. The average pitch is the average of the distance between the highest points of two adjacent features. The average pitch is different than the width of the features because the features vary in dimension and they are overlapping, intersecting, and randomly placed on the surface of the film to reduce Moiré and to ensure that there is no un-patterned area on the film. It is preferred to have less than 0.1% un-patterned area on the film, because un-patterned area does not have the same optical performance as the wedge shaped elements, leading to a decrease in performance.

Preferred polymers for the formation of the optical elements include polyolefins, polyesters, polyamides, polycarbonates, cellulosic esters, polystyrene, polyvinyl resins, polysulfonamides, polyethers, polyimides, polyvinylidene fluoride, polyurethanes, polyphenylenesulfides, polytetrafluoroethylene, polyacetals, polysulfonates, polyester ionomers, and polyolefin ionomers. Copolymers and/or mixtures of these polymers to improve mechanical or optical properties can be used. Preferred polyamides for the transparent complex lenses include nylon 6, nylon 66, and mixtures thereof. Copolymers of polyamides are also suitable continuous phase polymers. An example of a useful polycarbonate is bisphenol-A polycarbonate. Cellulosic esters suitable for use as the continuous phase polymer of the complex lenses include cellulose nitrate, cellulose triacetate, cellulose diacetate, cellulose acetate propionate, cellulose acetate butyrate, and mixtures or copolymers thereof. Preferably, polyvinyl resins include polyvinyl chloride, poly(vinyl acetal), and mixtures thereof. Copolymers of vinyl resins can also be utilized. Preferred polyesters of the invention include those produced from aromatic, aliphatic or cycloaliphatic dicarboxylic acids of 4-20 carbon atoms and aliphatic or alicyclic glycols having from 2-24 carbon atoms. Examples of suitable dicarboxylic acids include terephthalic, isophthalic, phthalic, naphthalene dicarboxylic acid, succinic, glutaric, adipic, azelaic, sebacic, fumaric, maleic, itaconic, 1,4-cyclohexanedicarboxylic, sodiosulfoisophthalic and mixtures thereof. Examples of suitable glycols include ethylene glycol, propylene glycol, butanediol, pentanediol, hexanediol, 1,4-cyclohexanedimethanol, diethylene glycol, other polyethylene glycols and mixtures thereof.

In another embodiment of the invention, the optical modification layer is applied to the surface of nano-nodules. Nano-nodules provide an excellent bonding site between the binder and the optical element and provide a level of light diffusion. Further nano-nodules have been shown to hide small defects in the film providing a higher quality optical film for the display systems such as LCD displays. The nano-nodules preferably are integral to the macrostructure. Integral nano-nodules are preferred because they are optically coupled into the macrostructure improving optical film efficiency compared to nano-nodules that are not integral. Further, integral nano-nodules have been shown to be very durable and avoid deformation and dislocation compared to nano-nodules that have been coated onto the surface of the macrostructure.

The nano-nodules preferably comprise polymer. Polymers are preferred because polymers tend to have a low cost compared to inorganic material, have a high light transmission, can be melt processed and have excellent replication fidelity necessary for nanometer sized objects. In one embodiment of the invention, the nano-nodules comprise an olefin-repeating unit. Polyolefin polymers are low in cost and high in light transmission. Further, polyolefin polymers are efficiently melt-extrudable and therefore can be used to create nano-nodules in roll form.

In another embodiment of the invention, the nano-nodules comprise a carbonate repeating unit. Polycarbonates have high optical transmission values that allows for high light transmission and diffusion. High light transmission provides for a brighter LC device than diffusion materials that have low light transmission values. Further polycarbonates have relatively high Tg suitable for LCD display applications. In further embodiment of the invention, the nano-nodules comprise a ester repeating unit. Polyesters are low in cost and have good strength and surface properties. Further, polyester polymer is dimensionally stable at temperatures between 80 and 200 degrees C and therefore can withstand the heat generated by display light sources.

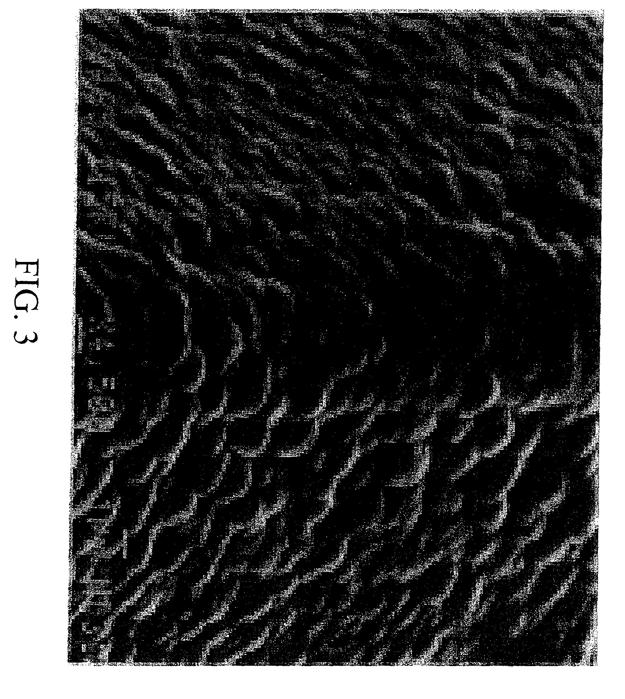

Figure 3 is a top magnified view of a 90-degree apex angle macrostructure containing nanometer sized nodules which serve to widen the luminance ½ angle compared to a macrostructure with smooth side walls. The convex nano-nodules in Figure 3 are roughly distributed over 95% of the surface of the macrostructure and very few of the nano-nodules overlap and intersect. The nano-nodules are integral to the macrostructure in Fig 3 and are made of the same material. Because the nano-nodules are integral, they have excellent adhesion reducing the probability that the nano-nodules will separate from the macrostructure. Also, because the nano-nodules are integral to the macrostructure transmitted light energy is optically coupled into the nano-nodules eliminating unwanted scatter or reflection that would reduce the efficiency of the optical film. The nano-nodules in Figure 3 are convex nodules and tend to be roughly elliptical in shape. The Ra of the nano-nodules 300 in Figure 3 is 925 nanometers and the nano-nodules in Figure 3 have a measured mean diameter of 1.08 micrometers. The nano-nodules in Fig. 3 are distributed over the surface of the macrostructure approximating a normal distribution having a standard deviation of 38 nanometers.

An optical film comprising a film bearing convex or concave optical elements on the light exit surface wherein the optical elements have a length, diameter, or other major dimension of at least 25 micrometers and wherein the surfaces of the optical elements exhibit an Rₐ value low enough to provide a reduction in on-axis optical gain of at least 20% compared to the same optical elements arrangement without the surface roughness is preferred. By providing surface roughness to the surface of the microstructures, the net result is a reduction in on-axis brightness and an associated increase in ½ angle. Also, by increasing the roughness average by at least 20%, some of the total internal reflection of the optical element is frustrated, allowing more light to be transmitted, increasing the efficiency of the optical film.

The size, shape and the distribution of the macrostructure are important in determining the distribution of light exiting the macrostructures. Macrostructures having an aspect ratio of between 0.5 and 6.0 are preferred. Macrostructures with an aspect ratio less than 0.2 tend to have a small influence on increasing on-axis gain. Macrostructures with an aspect ratio of greater than 6.0 are difficult to form utilizing melted polymer cast against patterned metallic roller as the polymer tends to adhere to the surface of high aspect ratio features. Further, high pressure is required to fully form the high aspect ratio features significantly reducing tool life.

In one embodiment of the invention the macrostructures have a repeating pattern. Repeating patterns generally provide low amounts of undesirable un-patterned area because repeating patterns have a relative high packing density compared to random macrostructures. In another embodiment of the invention, the macrostructures have a random pattern. While the random pattern does generally result in some un-patterned optical film because of the lower packing density compared to repeating patterns, a random pattern does generally result in lower levels of Moiré compared to repeating patterns. A random pattern has also been shown to hide or obscure small film defects from the viewer eye.

In another embodiment of the invention, the macrostructures have a length, diameter or other dimension of at least 100 micrometers. A microstructure having a dimension greater than 100 micrometers provides the desired collimation for incident light required to provide an on-axis gain greater than 1.0. Further, microstructures that do not have a dimension greater than 100 micrometers are more difficult to manufacture and because of there size can result in unwanted un-patterned area on the optical film.

Light redirecting macrostructures having an apex angle of approximately 90 degrees generally reject incident light at off axis angles and allow at or near on-axis to be transmitted. Typically, a plot of angle vs. luminance for a collimation macrostructure shows a peak luminance at or near 0 degree followed by a reduction in luminance as the angle approaches 90 degrees. The slope of the luminance reduction is a function of macrostructure geometry. It has been found that by providing a roughness on the surface of the macrostructures that the change in slope can be dramatically altered to provide increased luminance over a wider range of angles. In a preferred embodiment of the invention, an optical film comprising a film bearing convex or concave macrostructures on the light exit surface wherein the macrostructures have a length, diameter, or other major dimension of at least 25 micrometers and wherein the surfaces of the macrostructures exhibit an Rₐ value low enough to provide a reduction in on-axis optical gain of at least 25% compared to the same macrostructure arrangement without the surface roughness is preferred. It has been found that a reduction in on-axis gain of at least 25% results in a desirable increase in luminance at off-angles compared to smooth macrostructures resulting in an optical film with improved luminance properties.

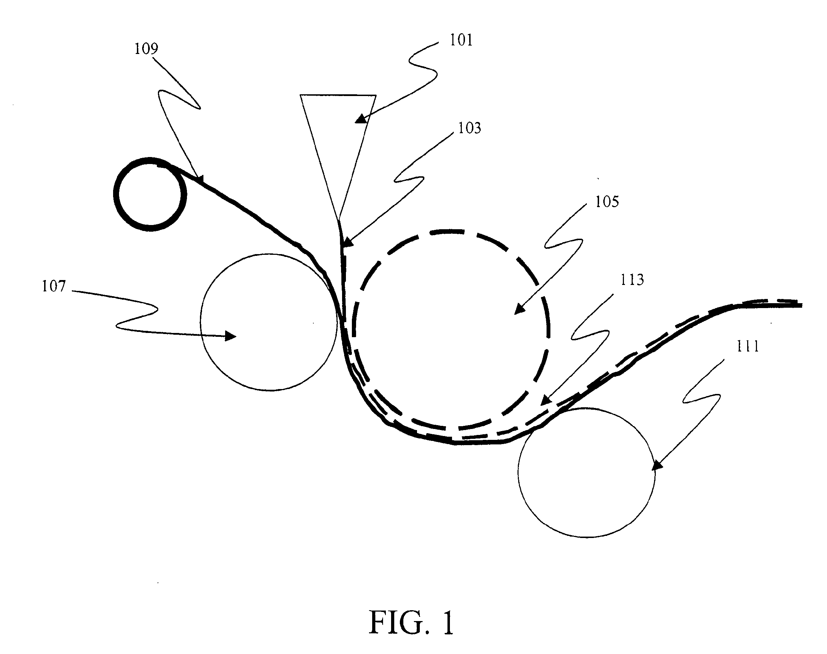

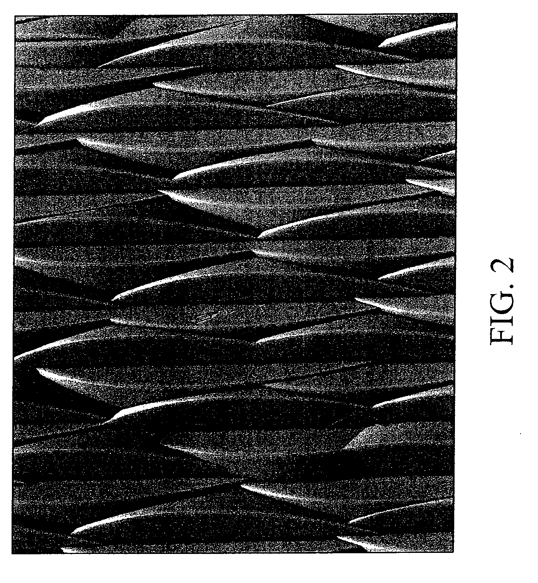

Fig. 1 is a simplified schematic diagram of an apparatus for fabricating the optical film such as described in connection with Fig. 2. The apparatus includes an extruder 101, which extrudes a material 103. The apparatus also includes a patterned roller 105 that contains macrostructures that forms the optical features in the optical layer 113. Additionally, the apparatus includes a pressure roller 107 that provides pressure to force material 103 into patterned roller 105 and stripping roller 111 that aids in the removal of material 103 from patterned roller 105.

In operation, a base layer 109 is forced between the pressure roller 107 and the patterned roller 105 with the extruded material 103. In an example embodiment, the base layer 109 is an oriented sheet of polymer. Moreover, the material 103 forms the optical layer 113, which includes optical features after passing between the patterned roller 105 and the pressure roller 107. Alternatively, an adhesion layer may be co-extruded with the material 103 at the extruder 101. Co-extrusion offers the benefit of two or more layers. The co-extruded adhesion layers can be selected to provide optimum adhesion to the base layer 109 and the optical layer 113 3 creating higher adhesion than a mono-layer. Accordingly, the co-extruded adhesion and optical layers are forced with the base layer between the pressure roller 107 and the patterned roller 105. After passing between the pressure roller 107 and the patterned roller 105, a layer 113 is passed along a roller 111. In a specific embodiment, the layer 113 is an optical structure of the embodiments described in detail with respect to Fig. 3.

In another preferred embodiment, the material 103 comprises a co-extruded layer of polymer having a skin layer that contacts the pattered roller 105 that has a melt index that is 50% greater than the remaining layers in the co-extruded structure. It has been found that a high flow skin layer aids in the replication fidelity of the polymer. The layers other than the skin layer may have a much lower melt index, resulting in a mechanically stiffer optical film that is better suited to withstand the rigors of display devices.

The invention may be used in conjunction with any liquid crystal display devices, typical arrangements of which are described in the following. Liquid crystals (LC) are widely used for electronic displays. In these display systems, an LC layer is situated between a polarizer layer and an analyzer layer and has a director exhibiting an azimuthal twist through the layer with respect to the normal axis. The analyzer is oriented such that its absorbing axis is perpendicular to that of the polarizer. Incident light polarized by the polarizer passes through a liquid crystal cell is affected by the molecular orientation in the liquid crystal, which can be altered by the application of a voltage across the cell. By employing this principle, the transmission of light from an external source, including ambient light, can be controlled. The energy required to achieve this control is generally much less than that required for the luminescent materials used in other display types such as cathode ray tubes. Accordingly, LC technology is used for a number of applications, including but not limited to digital watches, calculators, portable computers, electronic games for which light weight, low power consumption and long operating life are important features.

Active-matrix liquid crystal displays (LCDs) use thin film transistors (TFTs) as a switching device for driving each liquid crystal pixel. These LCDs can display higher-definition images without cross talk because the individual liquid crystal pixels can be selectively driven. Optical mode interference (OMI) displays are liquid crystal displays, which are "normally white," that is, light is transmitted through the display layers in the off state. Operational mode of LCD using the twisted nematic liquid crystal is roughly divided into a birefringence mode and an optical rotatory mode. "Film-compensated super-twisted nematic" (FSTN) LCDs are normally black, that is, light transmission is inhibited in the off state when no voltage is applied. OMI displays reportedly have faster response times and a broader operational temperature range.

The optical film of the present invention can even out the luminance when the film is used as a light-scattering film in a backlight system. Back-lit LCD display screens, such as are utilized in portable computers, may have a relatively localized light source (ex. fluorescent light) or an array of relatively localized light sources disposed relatively close to the LCD screen, so that individual "hot spots" corresponding to the light sources may be detectable. The diffuser film serves to even out the illumination across the display. The liquid crystal display device includes display devices having a combination of a driving method selected from e.g. active matrix driving and simple matrix drive and a liquid crystal mode selected from e.g. twist nematic, supertwist nematic, ferroelectric liquid crystal and antiferroelectric liquid crystal mode, however, the invention is not restricted by the above combinations. In a liquid crystal display device, the oriented film of the present invention is necessary to be positioned in front of the backlight. The optical film of the present invention can even the lightness of a liquid crystal display device across the display because the film has excellent light-scattering properties to expand the light to give excellent visibility in all directions. Although the above effect can be achieved even by the single use of such film, plural number of films may be used in combination. The homogenizing film may be placed in front of the LCD material in a transmission mode to disburse the light and make it much more homogenous.

The present invention has a significant use as a light source destructuring device. In many applications, it is desirable to eliminate from the output of the light source itself the structure of the filament which can be problematic in certain applications because light distributed across the sample will vary and this is undesirable. Also, variances in the orientation of a light source filament or arc after a light source is replaced can generate erroneous and misleading readings. A homogenizing film of the present invention placed between the light source and the detector can eliminate from the output of the light source any trace of the filament structure and therefore causes a homogenized output which is identical from light source to light source.

The optical film may be used to control lighting for stages by providing pleasing homogenized light that is directed where desired. In stage and television productions, a wide variety of stage lights must be used to achieve all the different effects necessary for proper lighting. This requires that many different lamps be used which is inconvenient and expensive. The films of the present invention placed over a lamp can give almost unlimited flexibility dispersing light where it is needed. As a consequence, almost any object, moving or not, and of any shape, can be correctly illuminated.

A reflection film can be formed by applying a reflection layer composed of a metallic film, etc., to the light exit surface of the optical film of the present invention and can be used e.g. as a retroreflective member for a traffic sign. It can be used in a state applied to a car, a bicycle, person, etc.

The optical film of the present invention may also be used in the area of law enforcement and security systems to homogenize the output from laser diodes (LDs) or light emitting diodes (LEDs) over the entire secured area to provide higher contrasts to infrared (IR) detectors. The films of the present invention may also be used to remove structure from devices using LED or LD sources such as in bank note readers or skin treatment devices. This leads to greater accuracy.

Fiber-optic light assemblies mounted on a surgeon's headpiece can cast distracting intensity variations on the surgical field if one of the fiber-optic elements breaks during surgery. A optical film of the present invention placed at the ends of the fiber bundle homogenizes light coming from the remaining fibers and eliminates any trace of the broken fiber from the light cast on the patient. A standard ground glass diffuser would not be as effective in this use due to significant back-scatter causing loss of throughput.

The optical films of the present invention can also be used to homogeneously illuminate a sample under a microscope by destructuring the filament or arc of the source, yielding a homogeneously illuminated field of view. The films may also be used to homogenize the various modes that propagate through a fiber, for example, the light output from a helical-mode fiber.

The optical films of the present invention also have significant architectural uses such as providing appropriate light for work and living spaces. In typical commercial applications, inexpensive transparent polymeric diffuser films are used to help diffuse light over the room. A homogenizer of the present invention, which replaces one of these conventional diffusers, provides a more uniform light output so that light is diffused to all angles across the room evenly and with no hot spots.

The optical films of the present invention may also be used to diffuse light illuminating artwork. The transparent polymeric film diffuser provides a suitable appropriately sized and directed aperture for depicting the artwork in a most desirable fashion.

Further, the optical film of the present invention can be used widely as a part for optical equipment such as a displaying device. For example, it can be used as a light-reflection plate laminated with a reflection film such as a metal film in a reflective liquid crystal display device or a front scattering film directing the film to the front-side (observer's side) in the case of placing the metallic film to the back side of the device (opposite to the observer), in addition to the aforementioned light-scattering plate of a backlight system of a liquid crystal display device. The optical film of the present invention can be used as an electrode by laminating a transparent conductive layer composed of indium oxide represented by ITO film. If the material is to be used to form a reflective screen, e.g. front projection screen, a light-reflective layer is applied to the transparent polymeric film diffuser.

Another application for the optical film is a rear projection screen, where it is generally desired to project the image from a light source onto a screen over a large area. The viewing angle for a television is typically smaller in the vertical direction than in the horizontal direction. The optical film acts to spread the light to increase viewing angle.

Embodiments of the invention may provide not only improved light diffusion and collimation but also an optical film of reduced thickness, that has reduced light absorption tendencies, that exhibits a soft angular cut-off, or that exhibits reduced Moire or Newton's Rings in an LCD display system.

The invention has been described in detail with particular reference to certain preferred embodiments thereof, but it will be understood that variations and modifications can be effected within the spirit and scope of the invention.

### Example

In this example a polycarbonate base sheet containing individual integral optical elements that were 1200 micrometers in length, 35 micrometers in width and 27 micrometers in height having an apex angle of approximately 90 degrees were coated with several optical modification layers. Thirteen-inch wide micro replicated polycarbonate support manufactured by Eastman Kodak Company, Rochester, New York, was coated to produce the enhanced wide-angle appearance having a softer angular cut-off compared to the optical element without the optical modification layer.

To make the 1-kilogram dispersion that was coated onto the micro replicated polycarbonate support, 988.3 grams of water and 11.7 grams of photographic gelatin was added together, along with a small amount of surfactant to aid in the bead coating process. This total dispersion was heated to 50°C.

The gelatin and matte bead dispersion was liquefied at 50 degrees Celsius (C), coated onto the micro replicated polycarbonate support at a wet coverage of 38.1 cm³/m² and then dried. The binder used in these examples is photographic gelatin, however this invention could use binders other that gelatin, such as organic materials, for example PolyVinyl Alcohol and PolyVinyl Pyrrilidone, and inorganic materials.

### Examples 2 - 23

Thirteen-inch wide micro replicated polycarbonate support manufactured by Eastman Kodak Company, Rochester, New York, was coated to produce the enhanced wide angle appearance.

A 1-kilogram dispersion of the gelatin and matte beads composition was prepared as follows. Starting with 702 grams of distilled water, 60 grams of a photographic gelatin and 234 grams creates an aqueous solution of a copolymer of gelatin and 2-Propenoic acid, 2-methyl-, methyl ester, homopolymer. Microscopic analysis showed that the dispersion consisted of uniform 1.3-micron matte beads in an aqueous gelatin medium. As the matte bead size increases or decreases as shown in Table 1, minute formulation changes are needed In addition, as the material composition of the matte beads change as shown in Table 1, minute formulation changes are needed

To make the 1 kilogram dispersion that was coated onto the micro replicated polycarbonate support, 962 grams of water, 11.7 grams of photographic gelatin and 26.3 of the dispersion containing gelatin and matte beads was added together, along with a small amount of surfactant to aid in the coating process. This total dispersion was heated to 50°C.

The gelatin and matte bead dispersion was liquefied at 50°C, coated onto the micro replicated polycarbonate support at a wet coverage of 38.1 cm³/m² and then dried.

This wide angle improving layer dispersion is such that multiple matte bead sizes could be easily formulated depending on the user requirements. This is also formulated so that is could be either coated simultaneously (1 pass) when the micro replicated polycarbonate support is cast or separately on top of the micro replicated polycarbonate support (2 pass).

**Table 1**

| **Display Example** | **Invention** | **Bead Size** | **Material** | **Laydown [cm³**/m**²**] |
|---|---|---|---|---|
| 1 | Control | None | none | 16.1 |
| 2 | Yes | 1.3 µm | 2-Propenoic acid, 2-methyl-, methyl ester | 16.1 |
| 3 | Yes | 1.3 µm | 2-Propenoic acid, 2-methyl-, methyl ester | 38.1 |
| 4 | Yes | 0.110 µm | 2-Propenoic acid, 2-methyl-, methyl ester | 16.1 |
| 5 | Yes | 0.110 µm | 2-Propenoic acid, 2-methyl-, methyl ester | 38.1 |
| 6 | Yes | 0.68 µm | 2-Propenoic acid, 2-methyl-, methyl ester | 16.1 |
| 7 | Yes | 0.68 µm | 2-Propenoic acid, 2-methyl-, methyl ester | 38.1 |
| 8 | Yes | 1.8 µm | 2-Propenoic acid, butyl ester | 16.1 |
| 9 | Yes | 1.8 µm | 2-Propenoic acid, butyl ester | 38.1 |
| 10 | Yes | 2.1 µm | 2-Propenoic acid, 2-methyl-, methyl ester | 16.1 |
| 11 | Yes | 2.1 µm | 2-Propenoic acid, 2-methyl-, methyl ester | 38.1 |
| 12 | Yes | 3.6 µm | methyl methacrylate, ethyleneglycol dimethacrylate | 16.1 |
| 13 | Yes | 3.6µm | methyl methacrylate, ethyleneglycol dimethacrylate | 38.1 |
| 14 | Yes | 9.8 µm | 2-Propenoic acid, 2-methyl-, methyl ester, Benzene, diethenyl-,Benzene, ethenylethyl- | 16.1 |
| 15 | Yes | 9.8µm | 2-Propenoic acid, 2-methyl-, methyl ester, Benzene, diethenyl-,Benzene, ethenylethyl- | 38.1 |
| 16 | Yes | 16.5 µm | 2 2-Propenoic acid, 2-methyl-, methyl ester, Benzene, diethenyl-,Benzene, ethenylethyl | 16.1 |
| 17 | Yes | 16.5 µm | 2 2-Propenoic acid, 2-methyl-, methyl ester, Benzene, diethenyl-,Benzene, ethenylethyl | 38.1 |
| 18 | Yes | 26.0 µm | methyl methacrylate, ethyleneglycol dimethacrylate | 16.1 |
| 19 | Yes | 26.0 µm | methyl methacrylate, ethyleneglycol dimethacrylate | 38.1 |
| 20 | Yes | 1.3µm | 2-Propenoic acid, 2-methyl-, methyl ester | 16.1 |
| 21 | Yes | 1.3µm | 2-Propenoic acid, 2-methyl-, methyl ester | 38.1 |
| 22 | Yes | 1.3µm | 2-Propenoic acid, 2-methyl-, methyl ester | 16.1 |
| 23 | Yes | 1.3µm | 2-Propenoic acid, 2-methyl-, methyl ester | 38.1 |

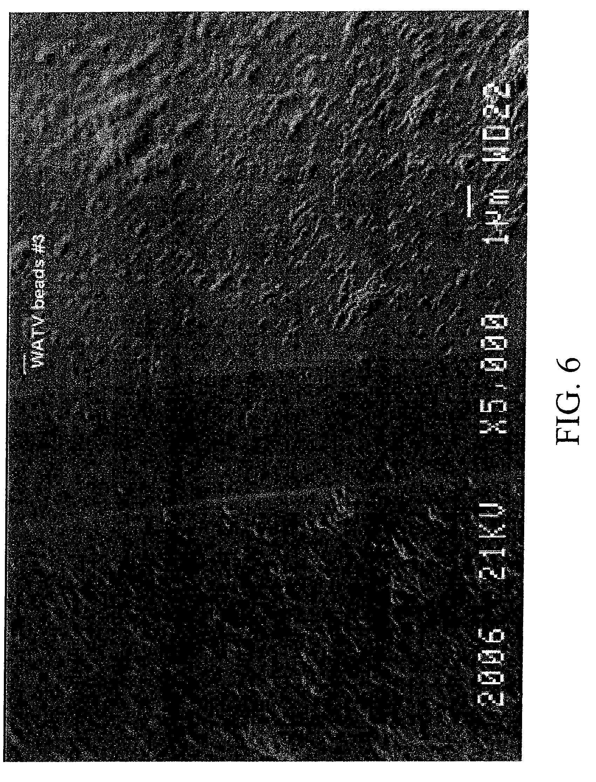

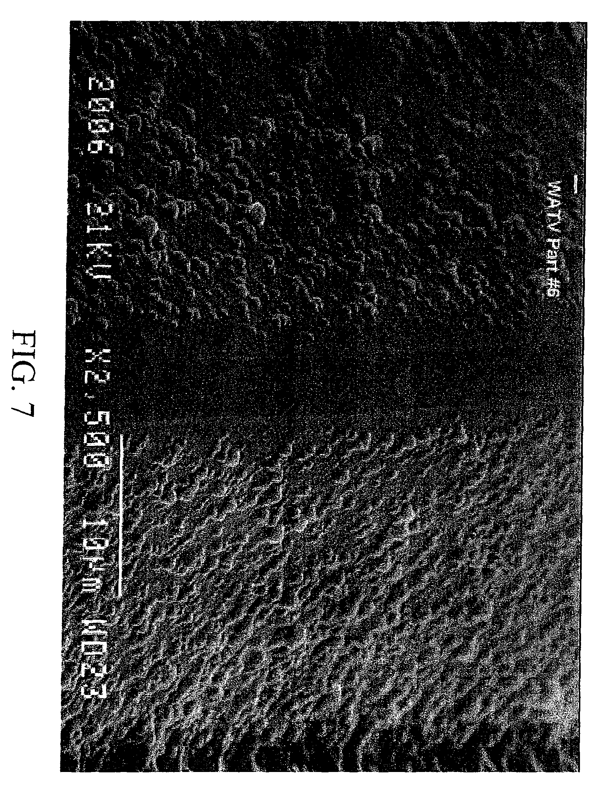

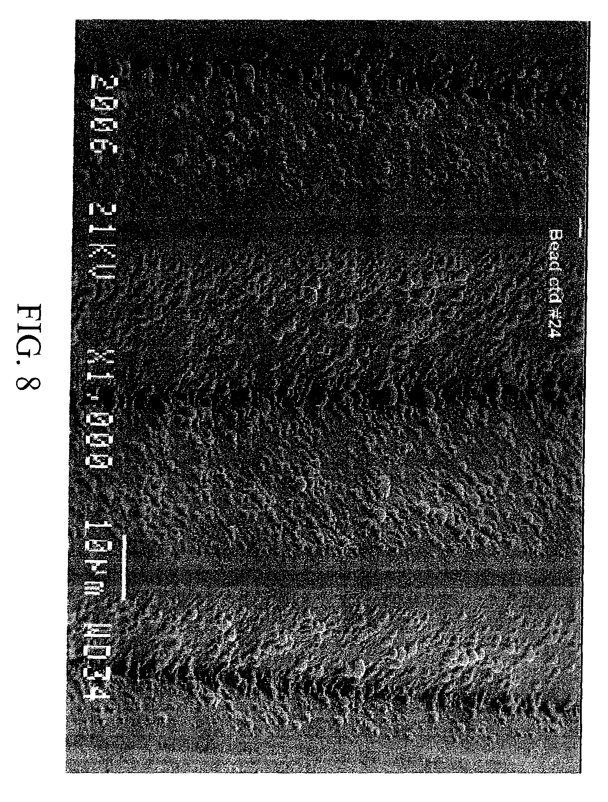

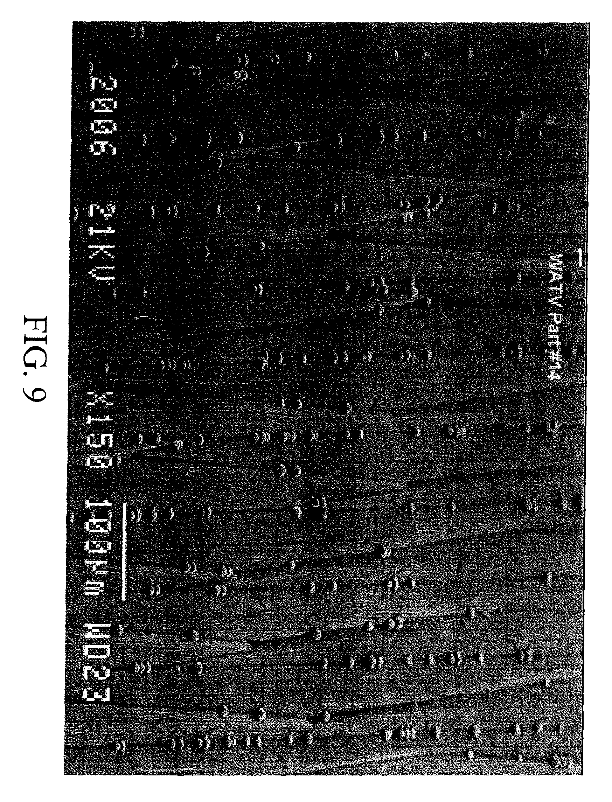

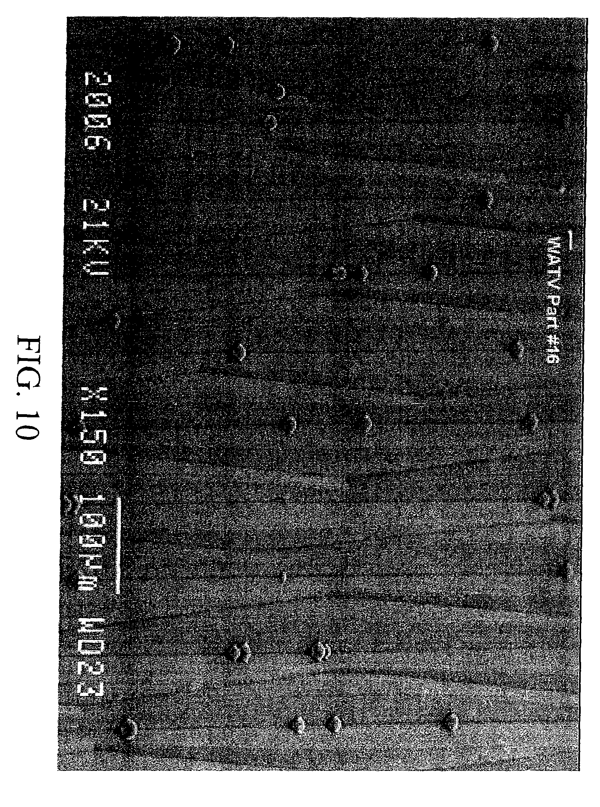

Dispersions consisting of small matte beads and gelatin allow for a more uniform coverage of the micro replicated features and yield higher off axis brightness when compared to the no-bead samples and with samples having larger size beads. The preferred embodiment includes beads in the size range of 0.110 to 3.6 microns, and preferably 0.68 microns to 1.3 microns. As the matte beads went smaller than 0.68 microns, the effect was significantly diminished due to an inability to diffract light. As the matte beads were larger than 3.6 microns, the beads settled into the micro replicated valleys, reducing the optical performance as a function of viewing angle. Figures 6-10 illustrate the coverage of the dispersions containing the matte beads as a function of location on the micro replicated features.

The dispersion wet laydown can used be used to customize the interaction between process conditions and optical performance. The preferred embodiment for this invention includes wet laydowns in the range of 16.1 to 38.1 cm³/m². This process variable can be used to optimize the manufacturing process based on the optical requirements of the invention.

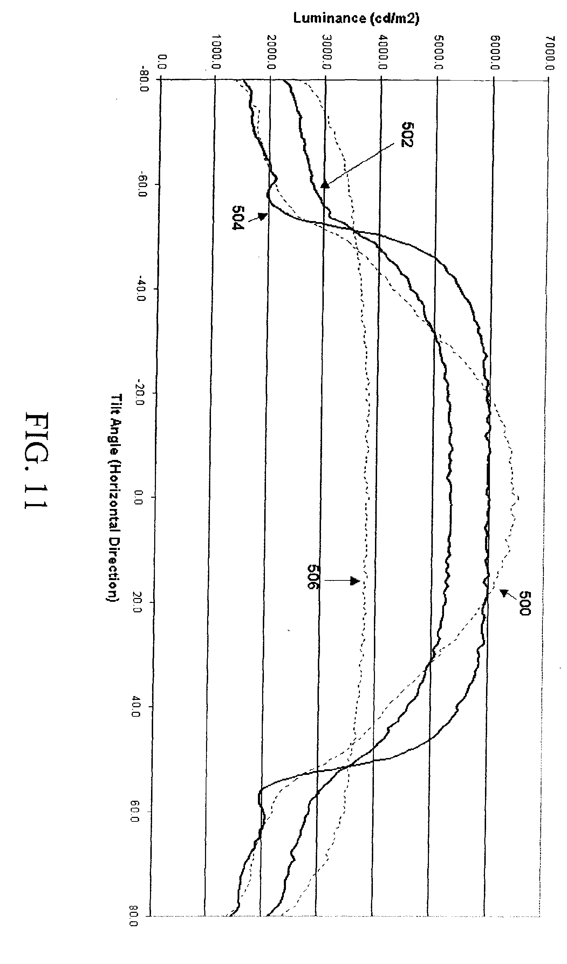

Figures 11-14 demonstrate the optical performance as a function of viewing angle for the various embodiments of the invention. Figure 11 shows luminance as a function of the horizontal tilt angle for various components within a liquid crystal display. The volume diffuser, 506, is used as a reference to the invention. Two different embodiments are represented by the luminance curves 502 and 504. In Example 3, represented as curve 502, the bead size and laydown have been optimized to provide a soft cutoff of the luminance curve at the higher tilt angles. In Example 18, represented by curve 504, the bead size and laydown have been optimized to provide a sharper cutoff of the luminance curve at the higher tilt angles. A commercially available brightness enhancement film, 500, has been included in Figure 11 as an additional reference to demonstrate the invention gain at the higher tilt angles.

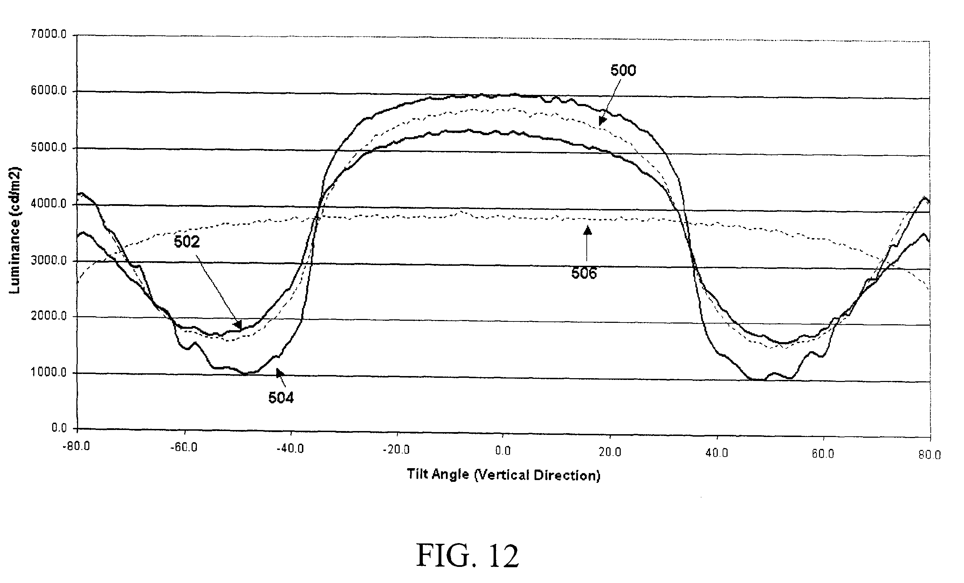

Figure 12 shows the luminance profile as a function of the vertical tilt angle. A similar soft cutoff on the luminance curve as a function of tilt angle is obtained in the vertical direction.

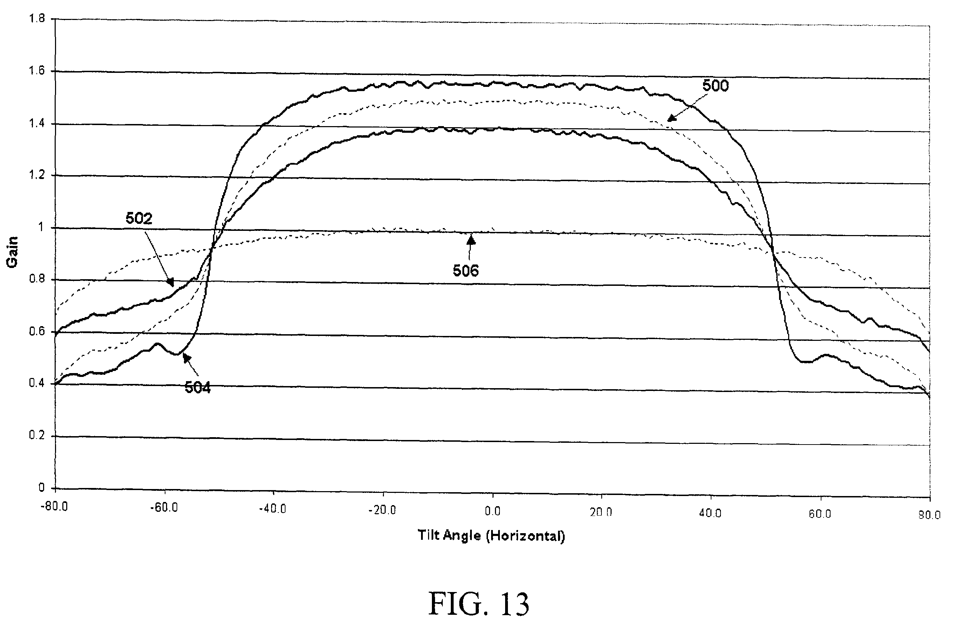

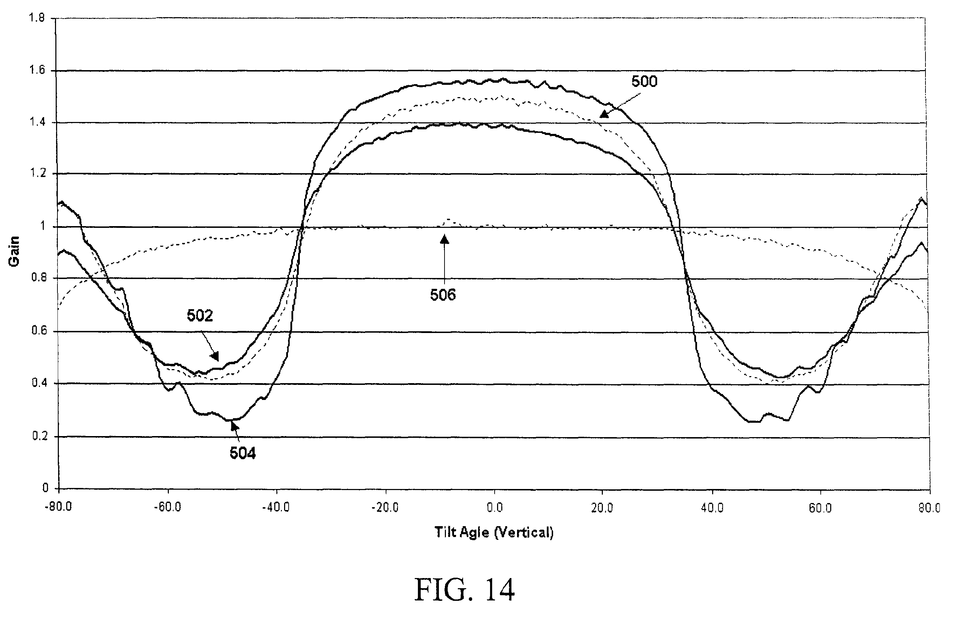

Figures 13 and 14 show the optical gain in the horizontal and vertical directions, respectively, as a function of tilt angle. Similar observations to the ones made on Figures 11 and 12 can be made on Figures 13 and 14, softer cutoffs of the optical gain profiles can be observed in both horizontal and vertical directions as a function of tilt angles.

The patents and other applications referred to in this specification are incorporated herein by reference.

### PARTS LIST

- 101: Extrusion die
- 103: Polymer melt
- 105: Patterned roller
- 107: Backing roller
- 109: Carrier web
- 111: Stripping roller
- 113: Optical film
- 500: Commercially available brightness enhancement film
- 502: Invention embodiment
- 504: Invention embodiment
- 506: Volume or slab diffuser

## Claims

1. A light redirecting film comprising a light exit surface bearing (a) optical elements and (b) an optical modification layer containing microbeads and a binder disposed over the optical elements wherein said light redirecting film has an optical gain of at least 1.20.

2. The light redirecting film of claim 1 wherein the microbeads comprise a polymeric material.

3. The light redirecting film of claim 1 wherein microbeads are substantially spherical.

4. The light redirecting film of claim 1 where in the microbeads are substantially elliptical.

5. The light redirecting film of claim 1 wherein the microbeads are present in two or more size distributions differing by at least 1.5 micrometers in major axis diameter.

6. The light redirecting film of claim 1 wherein the refractive index difference between the microbeads and the binder material is less than 0.10.

7. The light redirecting film of claim 1 wherein the refractive index difference between the microbeads and the optical element is greater than 0.10.

8. The light redirecting film of claim 1 wherein the refractive index difference between the microbeads, the binder and optical element is less than 0.10.

9. The light redirecting film of claim 1 wherein the ratio of the optical element height to the major axis diameter of the microbeads is less than 0.10.

10. The light redirecting film of claim 1 wherein the microbeads comprise an inorganic material.

11. The light redirecting film of claim 1 wherein the optical element comprises convex macrostructures that have a length, diameter, or other major dimension of at least 25 micrometers, wherein a major portion of the optical element surfaces is covered with the optical modification layer.

12. The light redirecting film of claim 1 wherein the microbeads have an average major axis of between 0.60 and 5.0 micrometers.

13. The light redirecting film of claim 1 wherein the microbeads have an average major axis of between 1.0 and 3.0 micrometers.

14. The light redirecting film of claim 1 wherein the optical elements comprise a prism.

15. The light redirecting film of claim 1 wherein the optical elements comprise individual optical elements.

16. The light redirecting film of claim 1 wherein the optical elements have a height to width aspect ratio between 0.5 and 5.0.

17. The light redirecting film of claim 1 wherein the optical modification layer covers between 40 and 60% of the surface area of the optical element.

18. The light redirecting film of claim 1 wherein the optical modification layer covers greater than 95% of the optical element.

19. The light redirecting film of claim 1 further comprising optical modification layer on a surface opposite the light exit surface.

20. The light redirecting film of claim 1 wherein the optical modification layer is conformal to the optical elements.

21. An optical film comprising a film bearing convex optical elements on the light exit surface wherein the optical elements have a length, diameter, or other major dimension of at least 25 micrometers and wherein the surfaces of the optical elements exhibit a Rₐ value of between 1.0 and 3.0 micrometers.

22. The optical film of claim 21 wherein the Rₐ value of the surface of the optical elements is between 1.0 and 1.8 micrometers.

23. The optical film of claim 21 wherein the optical elements have a height to width aspect ratio between 0.5 and 5.0.

24. The optical film of claim 21 wherein the optical elements have a repeating pattern.

25. The optical film of claim 21 wherein the optical elements have a length, diameter, or other major dimension of at least 100 micrometers.

26. An optical film comprising a film bearing convex or concave optical elements on the light exit surface wherein the optical elements have a length, diameter, or other major dimension of at least 25 micrometers and wherein the surfaces of the optical elements exhibit an Rₐ value low enough to provide a reduction in on-axis optical gain of at least 20% compared to the same optical elements arrangement without the surface roughness.

27. The optical film of claim 26 wherein the reduction in optical gain is between 20 and 63%.

28. The optical film of claim 26 wherein the optical elements have a height to width aspect ratio between 0.5 and 5.0.

29. A light redirecting film comprising a light exit surface bearing (a) optical elements and (b) an optical modification layer containing microbeads and a binder over the optical elements wherein the slope of the horizontal angular luminance curve between the angles of +50 and -50 degrees is substantially zero.

30. The light redirecting film of claim 26 wherein the slope of the horizontal angular luminance curve between the angles of +50 and +80 degrees is between 2 and 6.

31. A liquid crystal device comprising a light source and a polymeric re-directing film comprising a light exit surface bearing (a) optical elements and (b) an optical modification layer containing microbeads and a binder over the optical elements is located between the light source and a polarizing film.

32. A method for creating the optical modification layer by curtain coating, spray coating, sand blasting, embossing, the input or exit surface of the light redirecting film of claim 1.

33. A light redirecting film comprising a light exit surface bearing (a) optical elements and (b) an optical modification layer containing microbeads and a binder over the optical elements wherein the area under the curve of the horizontal angular luminance curve between the angles of +80 and - 80 degrees is between 5 and 15% greater than the light redirecting film without the optical modification layer.
